# EUROPÄISCHE PATENTSCHRIFT

(11) **EP 0 740 063 B1**
(45) Veröffentlichungstag und Bekanntmachung des Hinweises auf die Patenterteilung: **01.12.1999**
(21) Anmeldenummer: 96102066.6
(22) Anmeldetag: 13.02.1996
(51) Int. Cl.: F02K 9/52

(54) **Einspritzelement in Koaxialbauweise für Raketenbrennkammern**
Injector of coaxial configuration for a rocket combustion chamber
Injecteur coaxial pour une chambre de combustion d'une fusée

(30) Priorität: 29.04.1995 DE 19515879
(43) Veröffentlichungstag der Anmeldung: 30.10.1996
(73) Patentinhaber: DaimlerChrysler AG, 70567 Stuttgart (DE)
(72) Erfinder: Schmidt, Günther, Prof. Dr.-Ing., D-82024 Taufkirchen (DE); Haeseler, Dietrich, Dipl.-Ing., D-82024 Taufkirchen (DE)

(56) Entgegenhaltungen:
- DE-A- 4 203 775
- DE-B- 1 258 194
- DE-C- 4 305 154
- FR-A- 2 518 173

## Beschreibung

Die Erfindung betrifft ein Einspritzelement in Koaxialbauweise für Raketenbrennkammern und für Betrieb mit zwei Treibstoffen, wovon mindestens einer infolge niedrigen Dampfdruckes und/oder hoher Oberflächenspannung nur schwer in Tropfen zerfällt, gemäß dem Oberbegriff des Patentanspruches.

Einspritzelemente in Koaxialbauweise für Raketenbrennkammern sind in einer Vielzahl von Ausführungen bekannt. Eine besonders aktuelle Version ist in der DE-PS 43 05 154 beschrieben, welche hinsichtlich ihrer Merkmale mit den konstruktiven Aspekten im Oberbegriff der vorliegenden Erfindung übereinstimmt. Das in dieser Schrift behandelte Einspritzelement weist - ebenfalls - einen Zentralkörper auf, dessen Strömungskanal am Austritt eine kegelförmige Treibstoffverteilung (Oxidator) in einer Vielzahl einzelner Tropfen erzeugt. Eine Hülse umgibt den Zentralkörper bereichsweise in radialem Abstand konzentrisch, wodurch ein zweiter, koaxialer und ringförmiger Strömungskanal für den zweiten Treibstoff (Brennstoff) gebildet wird. In diesem koaxialen, ringförmigen Strömungskanal ist ein Strömungsteiler angeordnet, welcher den Treibstoffstrom in mehrere , mengengleiche Einzelströme aufspaltet. Zu diesem Zweck sind feine Schlitze radial von außen beispielsweise 1 mm tief in den Strömungsteiler eingearbeitet, z.B. eingesägt, deren Breite dabei nur etwa zwei Zehntelmillimeter beträgt, und welche somit fertigungstechnisch sehr anspruchsvoll sind (enge Toleranzen etc.). Aus diesen Schlitzen treten die Brennstoffstrahlen axial und parallel zueinander aus und treffen einzeln auf den Oxidatorspritzkegel, mit welchem sie sich dann vermischen.

Die beschriebene Form der Treibstoffaufbereitung ist ausdrücklich für hypergole Treibstoffe vorgesehen, welche bei Kontakt spontan und heftig miteinander reagieren.

Es ist zu erwarten, daß selbst diese aufwendige Variante des Koaxialprinzips nicht vollkommen zufriedenstellend arbeitet, wenn zumindest der durch den Strömungsteiler geförderte Brennstoff infolge seiner physikalischen Eigenschaften (Dampfdruck/Oberflächenspannung) - ausgehend vom flüssigen Zustand - nur unwillig in Tropfen zerfällt bzw. verdampft. Dies ist bei den Brennstoffen nicht - hypergoler Treibstoffkombinationen öfter der Fall.

In solchen Fällen wird gerne auf eine mechanische Aufbereitung im sogenannten "Impinging-Verfahren" ("Pralleinspritzung") zurückgegriffen, bei dem einzelne, feine Treibstoffstrahlen im Winkel gegeneinander gespritzt werden. Dabei werden - unter Abweichung vom Koaxialprinzip - sowohl der Brennstoff als auch der Oxidator in feinstrahliger Form schräg gegeneinander gespritzt, wobei Anordnungen mit zwei bis fünf (oder mehr) Spritzbohrungen je Element verwendet werden. Nachteilig bei diesem Verfahren sind der eher stochastische Strahlenzerfall in Tröpfchen beim Aufprall, die große Anzahl "vagabundierender" Tropfen und somit eine starke Wechselwirkung zwischen den einzelnen Elementen. Daraus resultieren eine hohe Empfindlichkeit auf Verbrennungsschwingungen und eine schlechte Skalierbarkeit für unterschiedliche Schubklassen über die Zahl der Elemente.

Diese Nachteile wiederum sind in der Regel bei Koaxial-Einspritzsystemen nicht gegeben.

Angesichts dieser bekannten Lösungen mit ihren spezifischen Nachteilen besteht die Aufgabe der Erfindung darin, ein Einspritzelement für in flüssigem Ausgangszustand in Raketenbrannkammem einzubringende Oxidator-Brennstoff-Kombinationen mit wenigstens einer nur schwer in Tropfen zerfallenden bzw. verdampfenden Komponente zu schaffen,welches bei guter, mechanischer Aufbereitung beider Komponenten alle bekannten Vorteile des Koaxialprinzipes beibehält, wie z.B. eine hohe Sicherheit gegen Verbrennungsschwingungen und eine einfache Skalierbarkeit (Schubeinstellung) über die Zahl der Elemente.

Diese Aufgabe wird durch die im kennzeichnenden Teil des Hauptanspruches genannten Merkmale gelöst, in Verbindung mit den gattungsbildenden Merkmalen in dessen Oberbegriff.

Das erfindungsgemäße Einspritzelement ist also in Koaxialbauweise ausgeführt, wobei der schwerer zerfallende/verdampfende Treibstoff, in der Regel der Brennstoff, durch den äußeren, koaxialen Ringkanal geleitet wird. Mit Hilfe eines dort angeordneten Strömungsteilers mit paarweise im Winkel auf je einen gemeinsamen Schnittpunkt gerichteten, gleichmäßig um den Zentralkörper herum verteilten Durchtrittskanälen wird der "trägere" Treibstoff - ausgehend von einem großen, ringförmigen Strömungsquerschnitt - in eine gerade Anzahl feiner Strahlen aufgeteilt und stromabwärts des Strömungsteilers durch Aufeinanderprallen je zweier Strahlen ("Impinging") weiter aufbereitet. Die dabei entstehenden Tröpfchenfächer treffen dann - weiter stromabwärts - auf den aus dem Zentralkörper austretenden Treibstoffkegel, in der Regel den Oxidator. Auf diese Weise wird ein ausreichend feines und homogenes Treibstoffgemisch für eine optimale Verbrennung bereitgestellt.

Die Erfindung wird anschließend anhand der Zeichnungen noch näher erläutert. Dabei zeigen in etwas vereinfachter, nicht maßstäblicher Darstellung:
- Fig. 1: einen Längsschnitt durch ein Einspritzelement mit Teilen des Einspritzkopfes;
- Fig. 2: eine Ansicht entsprechend Pfeil II in Fig. 1, wobei nur der Strömungsteiler am Zentralkörper - in vergrößertem Maßstab - dargestellt ist;
- Fig. 3: einen Schnitt durch den Strömungsteiler entsprechend dem Verlauf III-III in Fig. 2.

Das Einspritzelement 1 ist Bestandteil des Einspritzkopfes eines Raketentriebwerkes, wobei in Abhängigkeit von der Triebwerksgröße und dem Triebwerksschub bis zu mehreren hundert dieser Elemente installiert und strömungstechnisch parallelgeschaltet sind. Jedes Einspritzelement 1 besteht aus zwei Hauptteilen, dem Zentralkörper 5 und der Hülse 2.

Durch den Zentralkörper 5 führt ein Strömungskanal, welcher in aller Regel vom Oxidator 13, hier beispielsweise LOX, durchströmt wird. Die eingangs des Kanales angeordnete Drossel 3 dient zur Einstellung des gewünschten Einspritzdruckverlustes und somit zur schwingungstechnischen Entkoppelung von Brennkammer und Fördersystem. Weiterhin dient sie zur Fixierung des nachgeordneten Dralleinsatzes 4, durch welchen der axialen Strömung des flüssigen Oxidators 13 eine Drehbewegung überlagert wird. Dieser Drall sowie die Strömungskanalgeometrie bis zur Mündung 16 führen dazu, daß sich der Oxidatorstrahl beim Eintritt in die Brennkammer definiert aufweitet und in viele Tropfen zerfällt. Im vorliegenden Fall ist beispielhaft eine Hohlkegelverteilung der Tropfen dargestellt, wobei dieser hohle Oxidatorkegel mit 23 bezeichnet ist.

Der Brennstoff 14, beispielsweise Kerosin oder MMH, welcher im gegebenen Fall die schwieriger aufzubereitende Treibstoffkomponente sein soll, strömt aus dem Verteilerraum 15 über radiale Drosselbohrungen 7 in den Ringspalt 18. Anschließend spaltet der - hier an den Zentralkörper 5 angeformte - Strömungsteiler 12 den Brennstoffstrom mittels der Durchtrittskanäle 6 in mehrere, feine Brennstoffstrahlen 21 mit vorzugsweise runden Querschnitten auf, welche etwa im Bereich der Mündung 17 paarweise in definiertem Winkel aufeinanderprallen ("Impinging") und dadurch zu Tröpfchenfächem 22 zerfallen, welche wiederum weiter stromabwärts auf den Oxidatorkegel 23 treffen, sich mit diesem vermischen und anschließend - als möglichst homogenes Brennstoff-/Oxidatorgemisch - verbrennen.

Aus Gründen der Festigkeit, Zuverlässigkeit, Dichtheit und somit der Sicherheit sind die meisten Bauteile über flüssigkeits- und gasdichte Schweißnähte miteinander verbunden. Die den Zentralkörper 5 und die Hülse 2 verbindende Schweißnaht ist mit 9 bezeichnet. Die Hülse 2 ist mit der den Oxidator 13 und den Brennstoff 14 trennenden Grundplatte 19 über die Schweißnaht 8, mit der brennkammerseitigen Frontplatte 20 über die Schweißnaht 11 verbunden. Die Schweißnaht 10 schließlich fixiert die Drossel 3 im Zentralkörper 5.

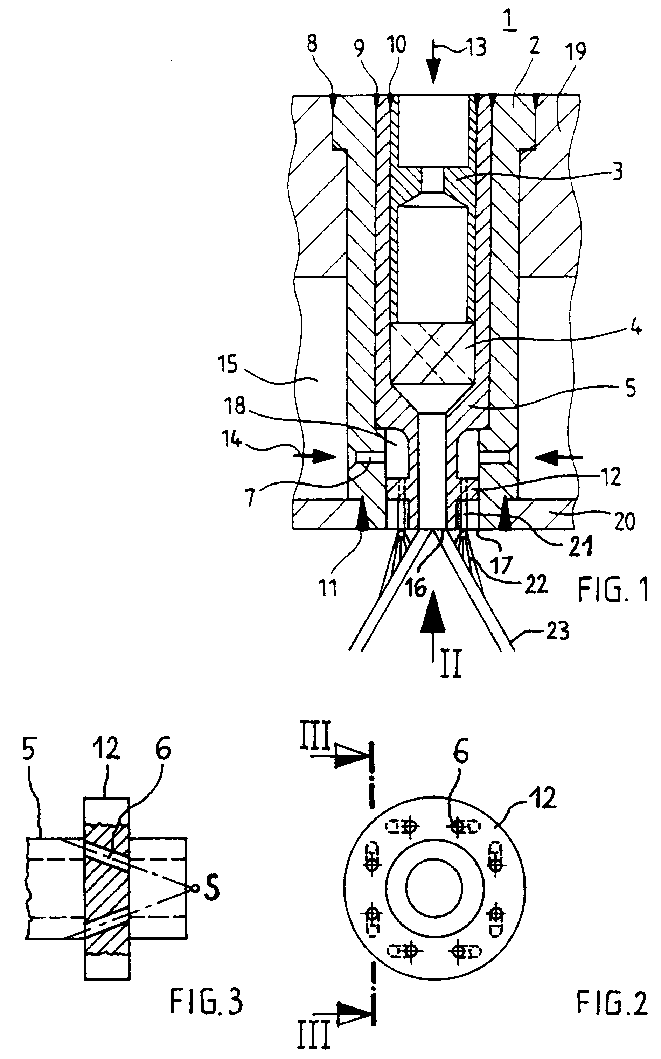

Fig. 2 zeigt eine auf das Doppelte vergrößerte Ansicht des Strömungsteilers 12 am Zentralkörper 5 von der Brennkammerseite her. Es ist zu erkennen, daß acht gleichmäßig verteilte Durchtrittskanäle 6, d.h. vier Funktionspaare, vorhanden sind. Bei realen Ausführungen kann die Zahl der Funktionspaare selbstverständlich auch größer oder kleiner sein, wobei im Sinne einer Optimierung sicher Versuche erforderlich sein werden. Die Durchtrittskanäle 6 sind vorzugsweise als gerade "Bohrungen" mit rundem Querschnitt ausgeführt und können somit z.B. spanabhebend mittels Bohrer oder durch Funkenerosion hergestellt werden.

Fig. 3 zeigt einen Schnitt durch ein Funktionspaar, d.h. durch zwei zusammenwirkende Durchtrittskanäle 6. Man sieht, daß die Achsen der beiden Durchtrittskanäle 6 zueinander im Winkel stehen und sich stromabwärts, d.h. brennkammerseitig, des Strömungsteilers 12 in einem Punkt S schneiden. Im Bereich dieses Punktes treffen die Brennstoffstrahlen 21 unter Prallzerstäubung ("Impinging") aufeinander, wobei diese in Fig. 2 und 3 der besseren Übersichtlichkeit wegen nicht wiedergegeben sind.

Die genaue Geometrie der Funktionspaare, d.h. Prallwinkelgröße, symmetrische oder ggf. asymmetrische Kanalorientierung, Kanaldimensionen etc., wird zu ihrer Optimierung ebenfalls praktische Versuche erfordern.

## Patentansprüche

1. Einspritzelement (1) in Koaxialbauweise für Raketenbrennkammern und für Betrieb mit zwei Treibstoffen, wovon mindestens einer infolge niedrigen Dampfdruckes und/oder hoher Oberflächenspannung nur schwer in Tropfen zerfällt, mit einem Zentralkörper (5) für den leichter zerfallenden Treibstoff, normalerweise den Oxidator (13), dessen Strömungskanal am Austritt (16) eine kegelförmige Tropfenverteilung (23) erzeugt, mit einer den Zentralkörper (5) unter Bildung eines ringförmigen Strömungskanales (18) für den schwerer zerfallenden Treibstoff, normalerweise den Brennstoff (14), konzentrisch umgebenden Hülse (2) und mit einem zwischen Zentralkörper (5) und Hülse (2) angeordneten, den Treibstoffstrom (14) in mehrere Einzelströme (21) aufspaltenden Strömungsteiler (12), **dadurch gekennzeichnet**, daß der Strömungsteiler (12) eine gerade Anzahl gleichmäßig um den Zentralkörper (5) herum verteilter, feine Treibstoffstrahlen (21) erzeugender, paarweise im Sinne einer Prallzerstäubung zusammenwirkender Durchtrittskanäle (6) aufweist, wobei die -gedachten - Achsen jeweils zweier benachbarter, zusammenwirkender Durchtrittskanäle (6) sich stromabwärts des Strömungsteilers (12) und stromaufwärts ihrer - gedachten - Auftreffpunkte auf dem aus dem Zentralkörper (5) austretenden Treibstoffkegel (23) schneiden (S).

2. Einspritzelement nach Anspruch 1, **dadurch gekennzeichnet**, daß es für einen Betrieb mit nicht-hypergolen Treibstoffen ausgelegt ist, wobei als Oxidator Flüssigsauerstoff (LOX), als Brennstoff Kerosin oder Monomethylhydrazin (MMH) verwendet wird.

## Claims

1. An injection element (1) in coaxial design for rocket combustion chambers and for operation with two propellants, whereof at least one decomposes into drops only with difficulty as a result of low vapour pressure and/or high surface tension, with a central body (5) for the easier decomposable propellant, which is usually the oxidant (13), whose flow conduit produces a conical distribution of drops (23) at the outlet (16), with a shell (2) concentricallv encompassing the central body (5) by forming an annular flow conduit (18) for the propellant with lower decomposability, which is usually the combustion fuel, and with a flow splitter (12) which is arranged between the central body (5) and the shell (2) and splits the flow of propellant (14) into several separate flows (21), characterized in that the flow splitter (12) is provided with an even number of pass-through conduits (6) which are evenly distributed about the central body, produce fine jets of propellant (21) and cooperate in pairs in the manner of an impact atomization, with the - imaginary - axes between two mutually adjacent cooperating pass-through ducts (6) intersecting on the propellant cone (23) exiting from the central body (5) downstream of the flow splitter (12) and upstream of their - imaginary - impact points.

2. An injection element as claimed in claim 1, characterized in that it is designed for operation with non-autoigniting propellants, with liquid oxigen (LOX) being used as oxidant and kerosene or monomethyl hydrazine (MMH) as combustion fuel.

## Revendications

1. Injecteur (1) coaxial pour chambres de combustion de fusée destiné à fonctionner avec deux ergols, dont au moins un ne se pulvérise que difficilement en gouttes en raison d'une faible pression de vapeur et/ou d'une tension superficielle élevée, comportant un corps central (5) destiné à l'ergol se pulvérisant le plus facilement, normalement l'oxydant (13), dont le canal d'écoulement produit à sa sortie (16) une distribution conique (23) des gouttes, comportant un manchon (2) entourant de manière concentrique le corps central (5) en formant un canal d'écoulement annulaire (18) destiné à l'ergol se pulvérisant le plus difficilement, normalement le carburant (14), et comportant un séparateur d'écoulement (12) disposé entre le corps central (5) et le manchon (2) et divisant le courant d'ergol (14) en plusieurs courants distincts (21), caractérisé en ce que le séparateur d'écoulement (12) possède un nombre pair de canaux de passage (6), répartis régulièrement autour du corps central (5), qui produisent de fins jets d'ergol (21) et ont une action combinée dans le sens d'une pulvérisation par impact, les axes (imaginaires) de chaque paire de canaux de passage voisins (6) ayant une action combinée se coupant en aval (S) du séparateur d'écoulement (12) et en amont de leurs points de rencontre - imaginaires - avec le cône d'ergol (23) sortant du corps central (5).

2. Injecteur selon la revendication 1, caractérisé en ce que celui-ci est conçu pour fonctionner avec des ergols non hypergoliques, de l'oxygène liquide (LOX) étant utilisée comme oxydant et du kérosène ou de la monométhylhydrazine (MMH) comme carburant.
